# EUROPÄISCHE PATENTANMELDUNG

(11) **EP 4 481 352 A1**
(43) Veröffentlichungstag der Anmeldung: **25.12.2024**
(21) Anmeldenummer: 24174816.9
(22) Anmeldetag: 08.05.2024
(51) Int. Cl.: G01M 1/16, D06F 33/48, D06F 34/16, G01M 1/22

(54) **BESTIMMEN EINER UNWUCHT EINER UM EINE DREHACHSE ROTIERENDEN KOMPONENTE**

(30) Priorität: 21.06.2023 DE 102023205784
(71) Anmelder: BSH Hausgeräte GmbH, 81739 München (DE); Technische Universität Berlin, 10623 Berlin (DE)
(72) Erfinder: Melzow, Jakob, 16247 Joachimsthal (DE); Schliecker, Gudrun, 10967 Berlin (DE); Letzgus, Simon, 13347 Berlin (DE)

(57) **Zusammenfassung**

Die Erfindung betrifft ein Verfahren und eine Vorrichtung 1 zur Durchführung des Verfahrens zum Bestimmen einer Unwucht an einem schwingend aufgehängten und eine rotierende Komponente 4 aufweisenden Gegenstand 3, wobei die rotierende Komponente 4 mittels eines elektrischen Motors 14 zum Rotieren mit einer bestimmten Drehzahl angetrieben wird, indem der elektrische Motor 14 von einem bestimmten Strom durchflossen wird, wobei Sensoren 15, 16, 26 Betriebsdaten der rotierenden Komponente 4 kontinuierlich aufnehmen und einer mit den Sensoren 15, 16, 26 verbundenen Steuereinrichtung 20 zum Steuern der rotierenden Komponente 4 entsprechend den Betriebsdaten zuführen und wobei die Steuereinrichtung 20 die Unwucht aus den Betriebsdaten bestimmt. Bei diesem Verfahren umfassen die Sensoren 15, 16, 26 einen dem Gegenstand 3 zugeordneten Schwingungssensor 26 zum Messen von Schwingungen des Gegenstandes 3 in mehreren zueinander orthogonalen Dimensionen, einen Stromsensor 15 zum Messen des den Motor 14 durchfließenden Stroms und einen Drehzahlsensor 16 zum Messen der Drehzahl des Motors 14. Außerdem werden die Betriebsdaten einer der Steuereinheit 20 zugehörigen Korrelationseinheit 21, in welcher anhand von Trainingsdaten, welche als Betriebsdaten für den Gegenstand 3 bei jeweils vorgegebener Unwucht gemessen wurden, gelernte Korrelationen zwischen Unwuchten und Betriebsdaten gespeichert sind, zugeführt, und die Unwucht wird durch die Korrelationseinheit 21 aus den Betriebsdaten bestimmt wird. Das Verfahren dient insbesondere zum Steuern eines Schleuderprozesses in einer Wäschebehandlungsmaschine 1.

## Beschreibung

Die Erfindung betrifft ein Verfahren zum Bestimmen einer Unwucht an einem schwingend aufgehängten und eine rotierende Komponente aufweisenden Gegenstand, wobei die rotierende Komponente mittels eines elektrischen Motors zum Rotieren mit einer bestimmten Drehzahl angetrieben wird, indem der elektrische Motor von einem bestimmten Strom durchflossen wird, wobei Sensoren Betriebsdaten der rotierenden Komponente kontinuierlich aufnehmen und einer mit den Sensoren verbundenen Steuereinrichtung zum Steuern der rotierenden Komponente entsprechend den Betriebsdaten zuführen und wobei die Steuereinrichtung die Unwucht aus den Betriebsdaten bestimmt. Die Erfindung betrifft auch eine Vorrichtung zur Durchführung eines solchen Verfahrens.

Das Dokument EP 2 379 786 B1 offenbart ein Verfahren der oben definierten Gattung, das Verfahren implementiert in einer Wäschebehandlungsmaschine, wobei der schwingend aufgehängte Gegenstand ein Laugenbehälter mit einer Trommel ist. Gemäß diesem Dokument werden Auslenkungen des Laugenbehälters aufgrund einer Unwucht in der rotierenden Trommel gemessen und mit weiteren Messwerten, insbesondere ein Wert eines einem die Trommel antreibenden Motors zugeführten elektrischen Stroms und ein Wert einer Drehzahl der Trommel, zum Bestimmen einer Unwucht in der Trommel ausgewertet. Auch soll die sich bei entsprechend hohen Drehzahlen ausprägende Unwucht aus früh und bei niedriger Drehzahl gewonnen Messwerten prognostiziert werden. Dazu wird eine mit Daten zur Abfuhr von Flüssigkeit aus den Wäschestücken ermittelte Korrekturfunktion gebildet, aus welcher sich die Unwucht bei entsprechend hoher Drehzahl ergeben soll.

Das Dokument US 2020/0010999 A1 offenbart ein Verfahren, bei dem ein Ungleichgewichtsfehler in einer mit einer durch "Machine Learning" eingerichteten Wäschebehandlungsmaschine festgestellt wird, wobei der Ungleichgewichtsfehler durch Wäsche, die in der Wäschebehandlungsmaschine bewegt wird, hervorgerufen wird. Ein solcherart ermittelter Ungleichgewichtsfehler wird auch als Indikator zur Änderung eines Profils für einen Prozess zum Schleudern der Wäschestücke in der Wäschebehandlungsmaschine verwendet. Als Messgrößen für das Feststellen des Ungleichgewichtsfehlers dienen der den Motor, der die Trommel mit den Wäschestücken antreibt, durchfließende Strom und die Drehzahl des Motors. Dieser Ungleichgewichtsfehler wird festgestellt, wenn die Trommel sich derart langsam dreht, dass die Wäschestücke sich beim Drehen der Trommel umeinander bewegen, und entspricht damit keiner zeitlich weitgehend stationären Unwucht, wie sie beim Schleudern der Wäschestücke unter schnellem Drehen der Trommel, wobei die Wäschestücke innenseitig an der Trommel anliegen. Der Ungleichgewichtsfehler wird insbesondere über ein elektronisches Netz einem mobilen Terminal mitgeteilt, welches ihn dann einem Benutzer anzeigen kann. Eine Beeinflussung der Wäschebehandlungsmaschine über das mobile Terminal ist nicht vorgesehen.

Das Behandeln von Wäschestücken in einer Wäschepflegemaschine beinhaltet regelmäßig einen Schleudervorgang, eventuell auch mehrere Schleudervorgänge. Bei einem solchen Schleudervorgang wird den Wäschestücken Waschlauge, Spüllauge oder Wasser, die sie bei einem entsprechenden Wasch- oder Spülvorgang aufgesogen haben, durch Zentrifugieren bei entsprechend hoher Drehzahl zu einem großen Anteil entzogen und abgeführt, so dass die Wäschestücke schließlich durch Trocknen an der Luft oder in einem speziellen Wäschetrockner innerhalb angemessen kurzer Zeit vollständig getrocknet werden können.

Beim Schleudern von Wäschestücken in einem Schleudervorgang, wobei die Wäschestücke in einer schnell rotierenden Trommel zentrifugiert werden, sind die Wäschestücke in der Regel nicht derart gleichmäßig verteilt, dass sich die um eine vorgegebene Drehachse rotierende Trommel in einem Kräfte- und Momentengleichgewicht befindet. Vielmehr treten beim schnellen Rotieren der Trommel mit den Wäschestücken in der Regel Kräfte und Momente an der Trommel auf, welche diese und den Laugenbehälter, in dem die Trommel angeordnet ist, zu Schwingungen anregen und hierin als "Unwucht" bezeichnet sind. Deshalb ist der Laugenbehälter in der Wäschebehandlungsmaschine mittels Feder- und Dämpferbeinen schwingend aufgehängt. Dadurch werden Schwingungen des Laugenbehälters beim Schleudern gedämpft, wobei die Dämpferbeine die Energie der Schwingungen in Wärme umwandeln. Bei einer sehr hohen Drehzahl des Schleuderns, einer weitgehend vollgefüllten Trommel oder bei wenigen, aber schweren Wäschestücken in der Trommel kann eine solche Dämpfung unter Umständen nicht genügen. Bedenklich sind auch Vibrationen, die die Schwingung des Laugenbehälters dem Gehäuse der Wäschebehandlungsmaschine mitteilt, wenn diese deutlich sichtbar werden oder zusätzliche Geräusche verursachen.

Maßnahmen gegen eine Unwucht bestehen darin, die Drehzahl der Trommel beim Schleudern zu verringern oder das Schleudern ganz abzubrechen. Diese Maßnahmen haben aber zur Folge, dass die Entfeuchtung der Wäschestücke nicht bis zum gewünschten und erwartbaren Ziel gelingt. Es ist daher wünschenswert, solche Maßnahmen immer nur in minimal möglichen Umfang einzusetzen.

Das Bestimmen von Schwingungen eines schwingend aufgehängten Gegenstandes erfolgt insbesondere mittels eines an dem Gegenstand befestigten oder diesem räumlich zugeordneten Schwingungssensors, durch welchen diese Schwingungen direkt oder indirekt gemessen werden, wobei gegebenenfalls zusätzliche Daten, insbesondere geometrische Abmessungen und Betriebsdaten, des Gegenstandes mit ausgewertet werden.

Es besteht ein Bedarf an einem Verfahren der eingangs definierten Gattung, welches mit möglichst geringem Aufwand an Material und Datenverarbeitung ein möglichst genaues Bestimmen einer Unwucht eines schwingend aufgehängten Gegenstandes erlaubt. Dabei soll auch eine Prognose einer in einem Schleuderprozess zu erwartenden Unwucht möglich sein.

Bei der Anwendung des Verfahrens am schwingend aufgehängten Laugenbehälter einer Wäschebehandlungsmaschine, in welchem eine mit Wäschestücken befüllbare Trommel drehbar ist, soll das Erkennen einer Unwucht unter möglichst genauem Bestimmen der Unwucht erfolgen können, insbesondere um Maßnahmen gegen eine solche Unwucht gezielt und auf die Größe der Unwucht abgestimmt zu erlauben.

Zur Lösung dieser Aufgabe werden gemäß der Erfindung ein Verfahren mit eingangs und im Oberbegriff des entsprechenden unabhängigen Patentanspruchs aufgeführten Gattungsmerkmalen, welches zusätzlich die Merkmale des kennzeichnenden Teils des entsprechenden unabhängigen Patentanspruchs aufweist, und eine Vorrichtung zur Durchführung eines solchen Verfahrens gemäß entsprechendem unabhängigem Patentanspruch angegeben.

Bevorzugte Ausgestaltungen der Erfindung sind in den abhängigen Patentansprüchen sowie in nachfolgender Beschreibung aufgeführt und können auch in Kombinationen untereinander angewendet werden, soweit technische Erwägungen dies gestatten und auch sofern dies hierin nicht explizit ausgeführt ist. Bevorzugten Ausgestaltungen des erfindungsgemäßen Verfahrens entsprechen bevorzugte Ausgestaltungen der erfindungsgemäßen Vorrichtung und umgekehrt, soweit technische Erwägungen dies gestatten und auch sofern dies hierin nicht explizit ausgeführt ist.

Zur Lösung der Aufgabe wird gemäß der Erfindung dementsprechend angegeben ein Verfahren zum Bestimmen einer Unwucht an einem schwingend aufgehängten und eine rotierende Komponente aufweisenden Gegenstand, wobei die rotierende Komponente mittels eines elektrischen Motors zum Rotieren mit einer bestimmten Drehzahl angetrieben wird, indem der elektrische Motor von einem bestimmten Strom durchflossen wird, wobei Sensoren Betriebsdaten der rotierenden Komponente kontinuierlich aufnehmen und einer mit den Sensoren verbundenen Steuereinrichtung zum Steuern der rotierenden Komponente entsprechend den Betriebsdaten zuführen und wobei die Steuereinrichtung die Unwucht aus den Betriebsdaten bestimmt. Bei diesem Verfahren umfassen die Sensoren einen dem Gegenstand zugeordneten Schwingungssensor zum Messen von Schwingungen des Gegenstandes in mehreren zueinander orthogonalen Dimensionen, einen Stromsensor zum Messen des den Motor durchfließenden Stroms und einen Drehzahlsensor zum Messen der Drehzahl des Motors, und die Betriebsdaten werden einer der Steuereinheit zugehörigen Korrelationseinheit, in welcher anhand von Trainingsdaten, welche als Betriebsdaten für den Gegenstand bei jeweils vorgegebener Unwucht gemessen wurden, gelernte Korrelationen zwischen Unwuchten und Betriebsdaten gespeichert sind, zugeführt, und die Unwucht wird durch die Korrelationseinheit aus den Betriebsdaten bestimmt. Die Sensoren können auch zum Erfassen weiterer physikalischer Größen, die eine Schwingung charakterisieren können, wie beispielsweise Kraft, Weg, Dehnung bzw. deren zeitlichen Ableitung.

Erfindungsgemäß wird somit eine neue Methode zum Bestimmen einer Unwucht an einem schwingend aufgehängten und eine rotierende Komponente aufweisenden Gegenstand angegeben, welche mit geringem Aufwand an Sensorik und Maßnahmen zur Auswertung der entsprechenden Signale eine Bestimmung der Unwucht erlaubt. Die Verwertung von Trainingsdaten, welche die Korrelationen zwischen Unwuchten und Betriebsdaten empirisch beinhalten, hat dabei den Vorteil, dass die für die Messung der Unwuchten maßgeblichen Zusammenhänge und die Parameter, die diese beschreiben, nicht vollständig bekannt sein müssen, und dass es auch nicht erforderlich ist, sich bei der zu beschreibenden Unwucht auf eine im Messzeitpunkt vorliegende Unwucht zu beschränken. Stattdessen ist es möglich, zukünftige Unwuchten zu bestimmen, also zu prognostizieren.

Eine besondere Anforderung hinsichtlich der Platzierung des Schwingungssensors gibt es nicht, so dass die Platzierung des Sensors unter Beachtung gegebener räumlicher Bedingungen und unter Vermeidung von Beeinträchtigungen der Umgebung des Gegenstandes erfolgen kann, wobei auch die Entstehung möglichst großer Messsignale angestrebt werden kann.

Zum Erlangen der Trainingsdaten können in der rotierenden Komponente in dem schwingend aufgehängten Gegenstand durch gezielte Einbringung von Kalibriermassen genau definierte Unwuchten erzeugt werden, so dass durch die Beobachtung der entsprechenden Schwingungen des Gegenstandes sowie des elektrischen Stromes, den der Motor aufnimmt und der Drehzahl, mit welcher er die rotierende Komponente rotiert, Betriebsdaten erhalten werden, die im Anschluss zum Trainieren der Korrelationseinheit dienen können. Auch Messungen der Betriebsdaten ohne Einbringung von Kalibriermassen sind hilfreich, nicht zuletzt, um Unwuchten, die sich durch Asymmetrien der rotierenden Komponente selbst ergeben, erfassen und berücksichtigen zu können. Trainingsdaten können selbstverständlich auch erzeugt werden durch direkte Berechnung der Betriebsdaten in Abhängigkeit von vorgegebener Unwucht, sofern die das schwingungsfähige System beschreibenden Parameter bekannt sind oder erschlossen werden konnten.

Die Schwingungen, der Strom und die Drehzahl werden insbesondere als jeweilige Zeitreihen von Messwerten gemessen, wobei jeweils Zeitabstände zwischen zwei unmittelbar aufeinanderfolgenden Werten untereinander gleich und einem Bruchteil einer Umdrehungsperiode der Trommel entsprechen, und bei dem aus jeder der Zeitreihen eine Amplitude und eine Phase eines jeweiligen, der Umdrehungsperiode entsprechenden Drehfrequenz der Trommel Anteils der Zeitreihe bestimmt wird. Bei einer Drehfrequenz der Trommel von 1500 Umdrehungen pro Minute entsprechend 25 Hz, wie sie zum Schleudern praktisch eingesetzt wird, kann ein solcher Zeittakt etwa 2,5 Millisekunden betragen, womit eine Beobachtung der Schwingungen in Abhängigkeit von dem Rotationswinkel der Trommel möglich wäre. In einem solchen Fall beträgt die Umdrehungsperiode der Trommel 40 Millisekunden, und damit wäre eine bevorzugte Wahl für die in den Zeitreihen auftretenden Zeitabstände ein Wert von 2,5 Millisekunden, womit pro Umdrehung der Trommel 16 Messungen durchführbar sind und die Schwingung des Laugenbehälters entsprechend genau beschreibbar ist. Diese Zeitreihen können im Rahmen der Erfindung unmittelbar als Eingabewerte der Korrelationseinheit verwendet werden, wodurch allfällige Vorarbeiten vermieden werden.

Es ist aber auch denkbar und im Rahmen der Erfindung möglich, die Zeitreihen einer Vorverarbeitung zu unterziehen, beispielsweise um Rauscheffekte zu verringern und dadurch die Genauigkeit der Bestimmung der Unwucht zu erhöhen. Insbesondere können die Zeitreihen einer Tiefpass- oder Bandpassfilterung unterzogen werden, gegebenenfalls unterstützt durch die Anwendung einer schnellen Fouriertransformation.

In einer bevorzugten Ausgestaltung der Erfindung ist vorgesehen, dass in der Korrelationseinheit eine aus den Trainingsdaten bestimmte Regression implementiert ist, durch welche die Unwucht aus den Betriebsdaten bestimmt wird. "Regression" bezeichnet im Kontext des maschinellen Lernens jedes Modell, welches gegebene Eingangsgrößen auf eine kontinuierliche, reelle Zahl als Ausgangsgröße abbildet, im Gegensatz zur "Klassifikation", die entsprechende Eingangsgrößen auf diskrete Klassen abbildet. Bei eine Regression wird zwischen linearen Methoden (Lineare Regression) und nichtlinearen Methoden (beispielsweise ein neuronales Netz) unterschieden, wobei vorliegend sowohl lineare als auch nichtlineare Methode in Frage kommen.

In einer ersten weiter bevorzugten Ausgestaltung der Erfindung ist vorgesehen, dass die Korrelationseinheit ein mit den Trainingsdaten trainiertes neuronales Netz ist, in welchem die Regression implementiert ist.

In einer zweiten weiter bevorzugten Ausgestaltung der Erfindung ist diese in der Korrelationseinheit implementierte Regression eine PLS-Regression.

In einer anderen bevorzugten Ausgestaltung der Erfindung ist vorgesehen, dass die Unwucht für eine Drehzahl bestimmt wird, welche größer als die bei der Bestimmung der Unwucht gemessene Drehzahl ist. Dabei kommt die Erfindung zur Anwendung für die Prognose einer Unwucht, welche unter gegebenen Umständen, beispielsweise unter Annahme einer Steigerung der Drehzahl über einen vorgegebenen Zeitraum oder unter Annahme einer anderen, insbesondere höheren, Drehzahl als der gemessenen, im Anschluss an die Bestimmung der Unwucht, auftreten wird. Insbesondere ist also die Drehzahl, für welche die Unwucht bestimmt wird, zur Erreichung in der Zukunft im Rahmen eines vorgegebenen Drehzahlprofils vorgesehen.

Mit weiterem Vorzug ist vorgesehen, dass die Unwucht durch eine Verteilung einer Füllung in der rotierenden Komponente beeinflusst ist, wobei die Verteilung der Füllung veränderbar ist, indem die rotierende Komponente mit einer Drehzahl rotiert, welche geringer als eine Fixierungsdrehzahl ist, bei welchem Verfahren die bei einer vorgegebenen Drehzahl bestimmte Unwucht mit einem ersten Schwellwert verglichen wird und, falls die bestimmte Unwucht größer als der erste Schwellwert ist, die Drehzahl der rotierenden Komponente für ein vorgegebenes Zeitintervall auf einen Wert unterhalb der Fixierungsdrehzahl reduziert und anschließend wieder auf die vorgegebene Drehzahl erhöht wird, worauf eine erneute Bestimmung der Unwucht erfolgt. Dieser Fall tritt insbesondere auf im Falle, dass der schwingend aufgehängte Gegenstand ein Laugenbehälter in einer Wäschebehandlungsmaschine und die rotierende Komponente eine Trommel ist, in welcher eine Füllung von Wäschestücken vorliegt. Beim Zentrifugieren der Wäschestücke zwecks Entfernung einer Behandlungsflüssigkeit wie Waschlauge, Spüllauge oder Wasser wird die Trommel mit den Wäschestücken derart schnell mit einer Drehzahl oberhalb der Fixierungsdrehzahl gedreht, ab welcher sich die Wäschestücke an die Innenseite der Trommel anlegen und dabei eine Unwucht hervorrufen. Wenn die Bestimmung ergibt, dass diese Unwucht bei der bei der Messung gegebenen Drehzahl oder einer oberhalb dieser liegenden, noch zu erreichenden Drehzahl den gegebenen ersten Schwellwert überschreitet, dann kann durch Verlangsamung der Rotation unterhalb der Fixierungsdrehzahl erreicht werden, dass sich die Wäschestücke in der Trommel umverteilen und dadurch eine andere, insbesondere niedrigere, Unwucht hervorzurufen.

In einer weiteren bevorzugten Ausgestaltung der Erfindung ist vorgesehen, dass die rotierende Komponente in einem Wellenlager in dem Gegenstand gelagert ist, und bei dem aus der bestimmten Unwucht eine Last bestimmt wird, welcher das Wellenlager durch die Unwucht ausgesetzt ist. Damit kann die Belastung des Wellenlagers direkt bestimmt werden, womit es möglich wird, die Drehzahl so zu regeln, dass eine übermäßige Belastung des Wellenlagers vermieden wird.

In einer zusätzlichen bevorzugten Ausgestaltung der Erfindung ist vorgesehen, dass die rotierende Komponente bei einer vorgegebenen Nenndrehzahl rotiert und bei dem die Bestimmung der Unwucht zyklisch erfolgt, wobei jede bestimmte Unwucht mit einem zweiten Schwellwert verglichen wird und, falls die Unwucht größer als der zweite Schwellwert ist, die Drehzahl der rotierenden Komponente auf eine Unternenndrehzahl kleiner als die vorgegebene Nenndrehzahl reduziert wird. Mit weiterem Vorzug rotiert dann die rotierende Komponente bei der Unternenndrehzahl, wobei jede bestimmte Unwucht mit dem zweiten Schwellwert verglichen wird und, falls die Unwucht kleiner als der zweite Schwellwert ist, die Drehzahl der rotierenden Komponente auf eine Drehzahl größer als die Unternenndrehzahl und kleiner oder gleich der vorgegebenen Nenndrehzahl erhöht wird. Auf diese Weise ist eine Kontrolle der Drehzahl in Abhängigkeit von der mit zyklischer Wiederholung bestimmten Unwucht möglich.

In noch einer bevorzugten Ausgestaltung der Erfindung ist vorgesehen, dass der Schwingungssensor die Schwingungen in drei zueinander orthogonalen Dimensionen misst. Damit wird die Anwendung des "3D-Sensors", welcher Schwingungen und besonders die dadurch hervorgerufenen Beschleunigungen misst, für die Erfindung erschlossen.

Erfindungsgemäß wird auch eine Vorrichtung zur Durchführung des erfindungsgemäßen Verfahrens oder einer seiner Ausgestaltungen angegeben, umfassend eine in einem schwingend aufgehängten Gegenstand rotierende Komponente, einen elektrischen Motor zum Antreiben der rotierenden Komponente zum Rotieren mit einer bestimmten Drehzahl, indem der elektrische Motor von einem bestimmten Strom durchflossen wird, sowie Sensoren zum kontinuierlichen Aufnehmen von Betriebsdaten der rotierenden Komponente und eine mit den Sensoren verbundene Steuereinrichtung zum Steuern der rotierenden Komponente entsprechend den Betriebsdaten und zum Bestimmen der die Unwucht aus den Betriebsdaten.

In einer bevorzugten Ausgestaltung der Erfindung ist vorgesehen, dass der Gegenstand mittels Federbeinen und Dämpferbeinen in einem Gehäuse aufgehängt ist. Mit weiterem Vorzug ist die Vorrichtung als Wäschebehandlungsmaschine ausgebildet, wobei der Gegenstand ein Laugenbehälter ist, und wobei die rotierende Komponente eine in dem Laugenbehälter angeordnete Trommel zum Aufnehmen einer aus Wäschestücken gebildeten Füllung ist. Mit noch weiterem Vorzug ist die Vorrichtung ausgebildet, um das Verfahren zum Bestimmen der Unwucht in einem Schleuderprozess durchzuführen, bei welchem Schleuderprozess den Wäschestücken eine von diesen aufgesogene Behandlungsflüssigkeit, insbesondere Waschlauge, Spüllauge oder Wasser, durch Zentrifugieren entzogen wird.

Grundsätzlich kann die Erfindung an einer Wäschebehandlungsmaschine beliebigen Typs angewendet werden, zumal der zur Anwendung der Erfindung notwendige Aufwand recht gering ist. Neben der konventionellen Waschmaschine kommen somit auch die einfache Wäscheschleuder und der Waschtrockner in Betracht. Dabei kommt es nicht darauf an, wie die Drehachse der Trommel bestimmungsgemäß im Raum orientiert ist. Die Drehachse kann im Wesentlichen horizontal ausgerichtet sein wie nachfolgend im Detail beschrieben, sie kann aber auch vertikal oder in beliebigem Winkel zur Vertikalen orientiert sein. Die Trommel ist insbesondere zylindrisch ausgeführt mit einem parallel zur Drehachse erstreckten Mantel, einer Rückwand, an die eine Antriebswelle angeschlossen ist, an ihrem hinteren Ende, und einem als Kreisring ausgeführten Stirnboden, durch den er Innenraum der Trommel zum Einbringen und Herausholen der Wäschestücke zugänglich ist, an ihrem vorderen Ende.

Das in einer erfindungsgemäß ausgebildeten Wäschebehandlungsmaschine schwingend ausgebildete System mit dem Laugenbehälter und der Trommel weist insbesondere eine Resonanzfrequenz auf, und die höchste Drehfrequenz entsprechend der höchsten Drehzahl ist größer als die Resonanzfrequenz. Dies hat im Hinblick auf die effektive Dämpfung eventueller Schwingungen Vorteile. Die Resonanzfrequenz wird dabei insbesondere durch die schwingende Aufhängung des Laugenbehälters an Federbeinen und Dämpferbeinen im Gehäuse bestimmt. Bei ihr sind die aufgrund einer Unwucht zu erwartenden Schwingungen besonders groß. Deshalb ist es sinnvoll, beim Beschleunigen der Trommel auf die gewünschte Drehzahl die der Resonanzfrequenz entsprechende Drehzahl möglichst schnell zu passieren.

Bevorzugt wird das Drehen der Trommel beendet und neu begonnen, falls die Belastung durch die Unwucht oberhalb eines vorgegebenen zweiten Schwellwerts liegt. Das neue Beginnen des Drehens hat den Nutzen, dass sich die zu schleudernden Wäschestücke neu verteilen können, womit eine Reduzierung der zunächst vorliegenden Unwucht ergeben kann. Mit zusätzlichem Vorzug ist die Drehfrequenz der Trommel beim erstmaligen Bestimmen der Unwucht kleiner als die Resonanzfrequenz. Auf diese Weise erfolgt die Erkennung der Unwucht früh im Schleuderprozess, und der Zeitverlust aufgrund des neuen Beginns wird klein gehalten.

Ausführungsbeispiele der Erfindung sind nachfolgend anhand der beigefügten Zeichnung näher erläutert. Es zeigen:
- Fig. 1: eine Skizze eines Beispiels einer erfindungsgemäß eingerichteten Wäschebehandlungsmaschine in Seitenansicht mit einem schwingend aufgehängten Gegenstand, in welchem eine rotierende Komponente angeordnet ist;
- Fig. 2: eine Skizze derselben Wäschebehandlungsmaschine in Frontansicht;
- Fig. 3: ein Diagramm mit Testergebnissen von Unwuchten, bestimmt mit dem erfindungsgemäßen Verfahren; und
- Fig. 4: ein Diagramm eines Schleuderprozesses in einer erfindungsgemäß eingerichteten Wäschebehandlungsmaschine.

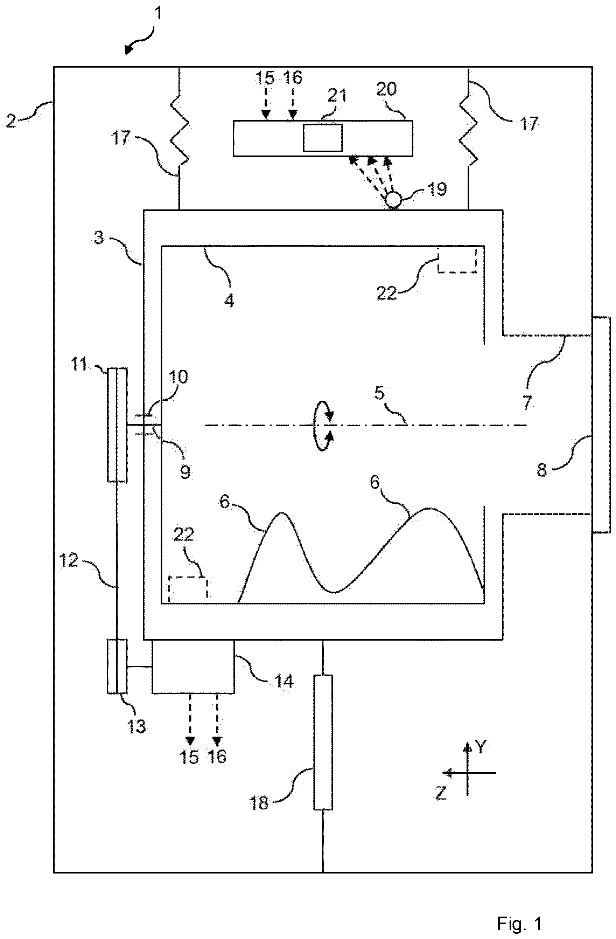

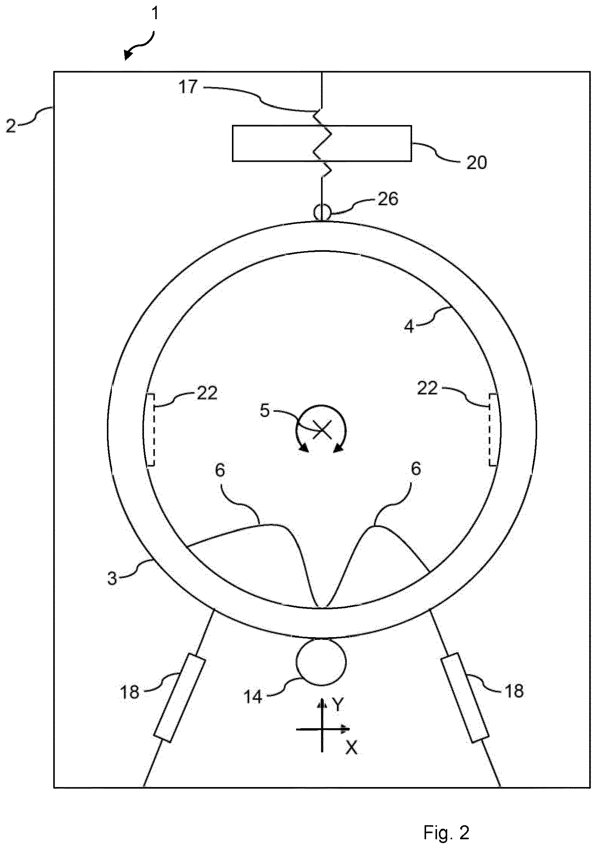

Die Figuren 1 und 2 zeigen in zwei zueinander orthogonalen Schnitten - Figur 1 in Ansicht in einer Y-Z-Ebene, also von einer Seite, und Figur 2 in Ansicht in einer X-Y-Ebene, also von vorn - eine schematisierte Ausführungsform einer Wäschebehandlungsmaschine 1, ausgestaltet als Beispiel für eine Vorrichtung zur Durchführung des erfindungsgemäßen Verfahrens. Die Wäschebehandlungsmaschine 1 hat ein Gehäuse 2 und darin angeordnet einen Laugenbehälter 3 zum Aufnehmen einer Prozessflüssigkeit, insbesondere Wasch- und Spüllauge für Textilien.

Die Wäschebehandlungsmaschine 1 ist ausgebildet als Waschmaschine 1. In dem Laugenbehälter 3 ist eine um eine Drehachse 5 drehbare Trommel 4 angeordnet. Die Drehachse 5 erscheint in Figur 1 als Punkt-Strich-Linie und in Figur 2 als X, jeweils umgeben von einem gebogenen Pfeil als Symbol der Rotation. Die Trommel 4 mit einer Prozessflüssigkeit behandelte Wäschestücken 6 auf. Von einem vorderen Ende zu einem hinteren Ende des Laugenbehälters erstreckt sich ein etwa zylindrischer Mantel, welcher mit der Trommel einen Spalt bildet. Die Trommel ist nahe des vorderen Endes von einem im wesentlichen kreisringförmigen Stirnboden abgeschlossen, nahe des hinteren Endes von einer im Wesentlichen kreisförmigen Rückwand. Eine in Figur 1 gestrichelt dargestellte Manschette 7 aus biegeschlaffem Material wie EPDM schließt den Laugenbehälter 3 flüssigkeitsdicht an das Gehäuse 2 an, eine Tür 8 schließt den Laugenbehälter 3 während des Betriebs der Wäschebehandlungsmaschine 1 flüssigkeitsdicht nach außen ab. Zur Rotation wird die Trommel 4 angetrieben über eine Antriebswelle 9, die an einem Wellenlager 10 dichtend durch den Laugenbehälter 3 geführt ist, eine erste Riemenscheibe 11, einen Antriebsriemen 12, eine zweite Riemenscheibe 13, und einen Motor 14, welcher am Laugenbehälter 3 befestigt ist. Der Wäschebehandlungsmaschine 1 zugehörige Systeme zur Zufuhr, Beheizung und Abfuhr von Prozessflüssigkeit wie Wasser und Wasch- oder Spülmittel sind in den Figuren nicht dargestellt, weil zur Beschreibung des erfindungsgemäßen Verfahrens nicht unbedingt erforderlich.

Figur 1 zeigt einen Stromsensor 15 zum Messen des den Motor 14 durchfließenden Stromes und einen Tachosensor 16 zum Messen der Drehzahl des Motors 14 nur schematisch als Leitungen. Bezüglich der Ausgestaltung dieser Sensoren 15 und 16 gibt es keine speziellen Vorgaben, und es kann jeder geeignete bekannte Sensor verwendet werden. Der Stromsensor 15 kann einen in die Leitung, durch die dem Motor 14 der Strom zufließt, eingesetzter elektrischer Widerstand sein, über welchem eine dem Strom proportionale Spannung gemessen wird, wobei der Widerstand in die Steuereinrichtung 20 integriert sein kann. Der Tachosensor 16 kann eine im Motor 14 befindliche Spule sein, in der immer, wenn der Motor 14 die Trommel 4 dreht, eine Spannung induziert wird, welche der Steuereinrichtung 20 zum Bestimmen der Drehzahl zugeführt wird.

Der Laugenbehälter 3 ist mittels Federbeinen 17 und Dämpferbeinen 18 schwingend im Gehäuse 2 aufgehängt. Unwuchten, die sich insbesondere durch ungleichmäßig in der Trommel 4 verteilte Wäschestücke 6 ergeben und insbesondere dann, wenn die Trommel 4 zum Entfeuchten der Wäschestücke 6 durch Zentrifugieren oder Schleudern besonders schnell gedreht wird, besonders groß sein können, führen zu Schwingungen des Laugenbehälters 3, die von den Federbeinen 17 und Dämpferbeinen 18 aufgefangen werden, wobei die Energie dieser Schwingungen in den Dämpferbeinen 18 in Reibungswärme umgewandelt und an die Umgebung abgegeben wird.

Ein 3D-Sensor 19 ist vorgesehen, um Schwingungen des Laugenbehälters 3 in drei zueinander orthogonalen Dimensionen zu messen, wobei die Messwerte wiederum der Steuereinrichtung 20 zugeführt werden. Vorliegend ist dieser 3D-Sensor oben auf dem Laugenbehälter 3 angebracht, was aber keine notwendige Bedingung ist. Grundsätzlich kann der 3D-Sensor an einer beliebigen Stelle des Laugenbehälters 3 oder sogar abseits dessen angebracht sein, wobei vorzugsweise der 3D-Sensor 19 an einer Stelle angebracht wird, an welcher die Schwingungen des Laugenbehälters 3 aufgrund möglicher Unwuchten besonders groß sind, um Messfehler gering zu halten und ein besonders gutes Signal-Rausch-Verhältnis zu erzielen.

Das Bestimmen der Schwingungen des Laugenbehälters 3 dient zum Beobachten dieser Schwingungen und auch zu deren Beeinflussung. Solche Beeinflussung kann derart geschehen, dass federnde und dämpfende Eigenschaften der Federbeine 17 und Dämpferbeine 18 in geeigneter Weise beeinflusst werden, oder dass ein Prozess, in dem Wäschestücke 6 unter Hervorrufung einer Unwucht behandelt werden, in Reaktion auf solche Schwingungen gesteuert oder abgebrochen und neu gestartet wird.

Der Laugenbehälter 3 und/oder die Federbeine 17 und Dämpferbeine 18 können weitere nicht dargestellte Sensoren in Form von Dehnmessstreifen zur Erfassung von schwingungsbedingten Verformungen des Laugenbehälters 3 und/oder der über die Federbeine 17 und Dämpferbeine 18 eingeleiteten Kräfte umfassen. An den Auflagerstellen der Federbeine 17 und Dämpferbeine 18 könnten auch nicht dargestellte Kraftaufnehmer als weitere Sensoren angeordnet sein, die bspw. als Messunterlegscheiben ausgebildet sind.

Die Steuereinrichtung 20 dient der Steuerung der Wäschebehandlungsmaschine 1, insbesondere des Motors 14 und anderer, nicht dargestellter Systeme, und der Aufnahme und Auswertung der oben genannten Messwerte.

Bei dem Verfahren zum Bestimmen einer Unwucht an einem schwingend aufgehängten und eine rotierende Komponente 4, nämlich die Trommel 4, aufweisenden Gegenstand 3, nämlich des Laugenbehälters 3, wird wobei die rotierende Komponente 4 mittels eines elektrischen Motors 14 zum Rotieren mit einer bestimmten Drehzahl angetrieben, indem der elektrische Motor 14 von einem bestimmten Strom durchflossen wird, wobei Sensoren 15, 16, 19, nämlich der Stromsensor 15, der Tachosensor 16 und der 3D-Sensor 19, Betriebsdaten der rotierenden Komponente 4 kontinuierlich aufnehmen und der mit den Sensoren 15, 16, 19 und/oder der ggf. mit den weiteren Sensoren verbundenen Steuereinrichtung 20 zum Steuern der rotierenden Komponente 4 entsprechend den Betriebsdaten zuführen und wobei die Steuereinrichtung 20 die Unwucht aus den Betriebsdaten bestimmt. Dabei werden die Betriebsdaten der Korrelationseinheit 21, in welcher anhand von Trainingsdaten, welche als Betriebsdaten für den Gegenstand 3 bei jeweils vorgegebener Unwucht gemessen wurden, gelernte Korrelationen zwischen Unwuchten und Betriebsdaten gespeichert sind, zugeführt, und die Unwucht wird durch die Korrelationseinheit 21 aus den Betriebsdaten bestimmt.

Zum Erlangen der Trainingsdaten können in der rotierenden Komponente 4 in dem schwingend aufgehängten Gegenstand durch gezielte Einbringung von Kalibriermassen 21 - wobei dann keine Wäschestücke 6 eingefüllt werden - genau definierte Unwuchten erzeugt werden, so dass durch die Beobachtung der entsprechenden Schwingungen des Gegenstandes 3 sowie des elektrischen Stromes, den der Motor 14 aufnimmt und der Drehzahl, mit welcher er die rotierende Komponente 4 rotiert, Betriebsdaten erhalten werden, die im Anschluss zum Trainieren der Korrelationseinheit 21 dienen. Auch Messungen der Betriebsdaten ohne Einbringung von Kalibriermassen 21 sind hilfreich, nicht zuletzt, um Unwuchten, die sich durch Asymmetrien der rotierenden Komponente 4 selbst ergeben, erfassen und berücksichtigen zu können. Trainingsdaten können selbstverständlich auch erzeugt werden durch direkte Berechnung der Betriebsdaten in Abhängigkeit von vorgegebener Unwucht, sofern die das schwingungsfähige System 3, 4, 17, 18 beschreibenden Parameter bekannt sind oder erschlossen werden konnten.

In der Korrelationseinheit 21 ist eine aus den Trainingsdaten bestimmte Regression implementiert, durch welche die Unwucht aus den Betriebsdaten bestimmt wird. "Regression" bezeichnet im vorliegenden Kontext des maschinellen Lernens jedes Modell, welches gegebene Eingangsgrößen auf eine kontinuierliche, reelle Zahl als Ausgangsgröße abbildet, im Gegensatz zur "Klassifikation", die entsprechende Eingangsgrößen auf diskrete Klassen abbildet. Bei eine Regression wird zwischen linearen Methoden (Lineare Regression) und nichtlinearen Methoden (beispielsweise ein neuronales Netz) unterschieden, wobei vorliegend sowohl lineare als auch nichtlineare Methode in Frage kommen.

In einer ersten weiter bevorzugten Ausgestaltung der Erfindung ist vorgesehen, dass die Korrelationseinheit ein mit den Trainingsdaten trainiertes neuronales Netz ist, in welchem die Regression implementiert ist.

In einer zweiten weiter bevorzugten Ausgestaltung der Erfindung ist diese in der Korrelationseinheit implementierte Regression eine PLS-Regression.

Die Korrelationseinheit 21 ist alternativ ein mit den Trainingsdaten trainiertes neuronales Netz, in welchem die Regression implementiert ist, oder in der Korrelationseinheit 21 ist eine aus den Trainingsdaten bestimmte PLS-Regression implementiert.

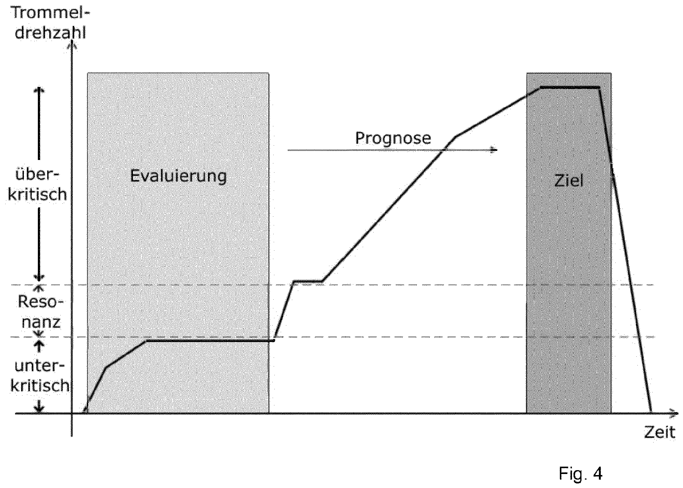

Das beschriebene Verfahren kann nicht nur dazu dienen, eine im Zeitpunkt, in dem die Messungen erfolgen, vorliegende Unwucht zu messen, sondern es ist auch möglich, eine zu einem hinter dem Zeitpunkt der Messungen liegenden, also zukünftigen, Zeitpunkt zu prognostizieren. Dabei wird insbesondere die Tatsache genutzt, dass in der Korrelationseinheit 21 die Zusammenhänge zwischen Betriebsdaten und Unwucht nur in Form von Korrelationen niedergelegt sind, nicht aber als mathematische Funktionen im engeren Sinne. Anders als solche Funktionen können Korrelationen auch zwischen Daten gebildet werden, die nicht für einen einzigen Zeitpunkt gelten, unter selbstverständlicher Voraussetzung, dass das Verhalten des Systems zwischen dem Zeitpunkt der Messung und dem Zeitpunkt, für den die bestimmte Unwucht gilt, stets dasselbe ist. Mit besonderem Vorzug wird dabei die Unwucht für eine Drehzahl bestimmt, welche größer als die bei der Bestimmung der Unwucht gemessene Drehzahl ist, womit eine Prognose der Unwucht erfolgt. Eine Schleuderprozess, in dem solche Prognosen eine Rolle spielen, wird nachfolgend anhand Figur 4 erläutert.

In der Wäschebehandlungsmaschine 1 ist die Unwucht durch die Verteilung der Wäschestücke, die die Füllung 6 in der rotierenden Komponente 4 bilden, beeinflusst, wobei die Verteilung der Füllung 6 veränderbar ist, indem die rotierende Komponente 4 mit einer Drehzahl rotiert, welche geringer als eine Fixierungsdrehzahl ist, bei welcher Fixierungsdrehzahl sich die Füllung weitgehend fest an die Innenwand der rotierenden Komponente 4 anlegt. Deshalb wird die bei einer vorgegebenen Drehzahl bestimmte Unwucht mit einem ersten Schwellwert verglichen und, falls die bestimmte Unwucht größer als der erste Schwellwert ist, die Drehzahl der rotierenden Komponente 4 für ein vorgegebenes Zeitintervall auf einen Wert unterhalb der Fixierungsdrehzahl reduziert und anschließend wieder auf die vorgegebene Drehzahl erhöht wird, worauf eine erneute Bestimmung der Unwucht erfolgt.

Bei dem Verfahren wird für ein Wellenlager 10, in welchem die rotierende Komponente (4) in dem Gegenstand 3 gelagert ist, aus der bestimmten Unwucht eine Last bestimmt wird, welcher das Wellenlager 10 durch die Unwucht ausgesetzt ist.

Insbesondere in einem Schleuderprozess in der Wäschebehandlungsmaschine 1 wird, wenn die rotierende Komponente 4 bei einer vorgegebenen Nenndrehzahl rotiert und die Bestimmung der Unwucht zyklisch erfolgt, jede bestimmte Unwucht mit einem zweiten Schwellwert verglichen und, falls die Unwucht größer als der zweite Schwellwert ist, die Drehzahl der rotierenden Komponente 4 auf eine Unternenndrehzahl kleiner als die vorgegebene Nenndrehzahl reduziert. Dadurch werden Belastungen durch übermäßig hohe Unwuchten vermieden.

Wenn die rotierende Komponente 4 bei der Unternenndrehzahl rotiert, wird dann auch jede bestimmte Unwucht mit dem zweiten Schwellwert verglichen und, falls die Unwucht kleiner als der zweite Schwellwert ist, die Drehzahl der rotierenden Komponente 4 auf eine Drehzahl größer als die Unternenndrehzahl und kleiner oder gleich der vorgegebenen Nenndrehzahl erhöht. Auf diese Weise kann die Effektivität des Schleuderprozesses erhöht werden, indem die durch eine zu hohe Unwucht bedingte Reduzierung der Drehzahl überprüft und gegebenenfalls aufgehoben wird.

Die an den Federbeinen 17 und Dämpferbeinen 18 schwingend aufgehängte Trommel 4 hat hinsichtlich ihrer Schwingungen eine Resonanzfrequenz (oder auch mehrere Resonanzfrequenzen), wobei die im Verfahren vorgesehene höchste Drehfrequenz größer als die Resonanzfrequenz ist. Dies hat im Hinblick auf die effektive Dämpfung eventueller Schwingungen Vorteile. Bei der Resonanzfrequenz sind die aufgrund einer Unwucht zu erwartenden Schwingungen allerdings besonders groß. Deshalb ist es sinnvoll, beim Beschleunigen der Trommel auf die gewünschte Drehfrequenz und auch beim Abbremsen nach Vollendung des Schleuderns die der Resonanzfrequenz entsprechende Drehfrequenz möglichst schnell zu passieren.

Besonders zu Beginn eines Schleuderns ist es sinnvoll, das Drehen der Trommel 4 zu beenden und neu zu beginnen, falls die Belastung unterhalb eines vorgegebenen zweiten Schwellwerts liegt. Dies erfolgt schon dann, wenn die Drehfrequenz der Trommel 4 beim Erkennen der Unwucht kleiner als die Resonanzfrequenz ist. Auf diese Weise erfolgt die Erkennung der Unwucht früh im Schleuderprozess, und der Zeitverlust aufgrund des neuen Beginns wird klein gehalten.

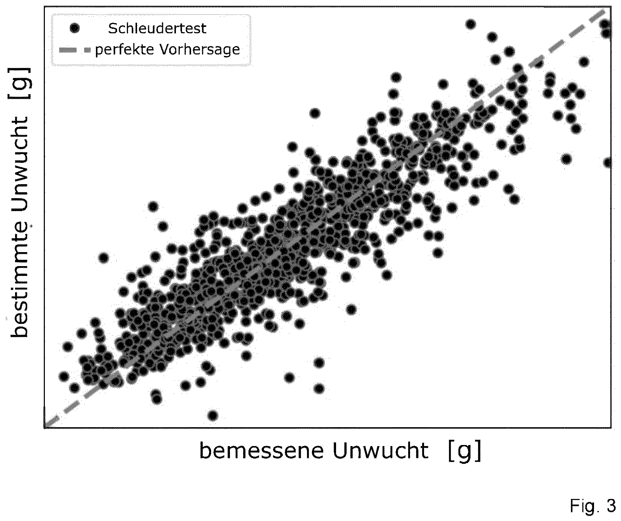

Das Diagramm in Figur 3 zeigt, wie genau das hier beschriebene neue Verfahren eine Unwucht aus Korrelationen in Trainingsdaten bestimmen kann. Gezeigt sind Ergebnisse von Tests ("spinning runs"), bei denen definierte Unwuchten in der Trommel 4 einer wie oben beschrieben eingerichteten Wäschebehandlungsmaschine 1 durch Anbringen von Kalibrierungsmassen 21 hervorgerufen waren. Die Abszisse des Diagramms mit der Bezeichnung "imbalance measured" gibt die Absolutbeträge der aus entsprechend angebrachten Kalibriermassen berechneten oder vorhergesagten Unwuchten an, die Ordinate mit der Bezeichnung "imbalance predicted" die durch die Korrelationseinheit 21 bestimmten Unwuchten. Jeder schwarze Kreis stellt einen Test dar.

Wie in Figur 3 leicht erkennbar, verteilen sich die Testdaten eher eng um die Diagonale im Diagramm, was die Genauigkeit des auf Korrelationen beruhenden Testverfahrens deutlich demonstriert. Abweichung der Testdaten von besagter Diagonalen erklären sich unter anderem daraus, dass nicht nur der Absolutbetrag einer Unwucht für die Schwingungen des Laugenbehälters 3 eine Rolle spielt, sondern auch die Platzierung oder Verteilung der Unwucht entlang der Drehachse und gegebenenfalls die Verteilung der Unwucht um die Drehachse 5 herum. Es mag auch zusätzliche Einflussgrößen geben, welche das vorliegende Modell nicht in Betracht zieht. Die eng um besagte Diagonale konzentrierte Verteilung der Testdaten zeigt also an, dass das Verfahren mit einem nur geringen Fehler eine vorhandene Unwucht identifizieren kann, und damit eine besonders geeignete Grundlage für Prognose und Vermeidung von Unwuchten darstellt.

Das Diagramm in Figur 4 zeigt einen typischen Schleuderprozess in einer entsprechend eingerichteten Wäschebehandlungsmaschine 1. Die Abszisse des Diagramms zeigt die Zeit ("time"), die Ordinate die Drehzahl der Trommel 4 mit Wäschestücken 6. Angedeutet auf der Ordinate sind auch die Drehzahlen, die unterhalb derjenigen liegen, bei denen es zu Resonanzen des schwingenden Systems kommt ( bezeichnet als "Subcritical"), die Drehzahlen, bei denen es zu solchen Resonanzen kommt (bezeichnet als "kritischer Bereich" oder "Resonance") und die Drehzahlen, die über denen liegen bei denen es zu Resonanzen kommt (bezeichnet als "Overcritical"), wobei die Lage des Bereichs "Resonance" gegebenenfalls empirisch zu bestimmen ist und auch von der Beladung der Trommel 4 mit Wäschestücken 6 abhängt.

Der in Figur 4 dargestellte Schleuderprozess beginnt mit dem Anlaufen der Trommel 4 mit den Wäschestücken 6 zunächst mit unterkritischen Drehzahlen und wird bis zu einer Drehzahl knapp unterhalb des kritischen Bereichs beschleunigt. Auch wiederholtes Hochbeschleunigen bis zu einer Drehzahl knapp über dem kritischen Bereich kann erfolgen, um zumindest kurzzeitig recht starke Schwingungen des Laugenbehälters 3 zu erhalten und damit eine eventuelle Unwucht möglichst genau bestimmen zu können. Ist die solcherart bestimmte Unwucht zu hoch, kann die Trommel 4 komplett gestoppt werden, so dass der Prozess von neuem begonnen werden kann im Bestreben, durch Umverteilung der Wäschestücke 6 innerhalb der Trommel eine niedrigere Unwucht zu erzielen. Schließlich wird, während die Drehzahl der Trommel abwechselnd oberhalb und unterhalb des kritischen Bereichs liegt, eine Prognose für die bei der höchsten Drehzahl zu erwartende Unwucht bestimmt, und unter Berücksichtigung dieser Prognose der Schleuderprozess durch weiteres Beschleunigen der Trommel 4 bis zur höchsten Drehzahl weitergeführt. Dabei gewährleistet die Prognose, dass die bei Drehzahlen gleich der höchsten Drehzahl oder wenig kleiner als diese auftretende Unwucht nicht so groß wird, dass Beschädigungen der Wäschebehandlungsmaschine 1 zu besorgen sind. Durch weiteres Bestimmen der Unwucht während des Schleuderprozesses kann die Drehzahl der Trommel 4 gegebenenfalls reduziert werden, um vorgegebenen Grenzen oder Schwellwerte für die Unwucht einzuhalten.

Die genaue Kenntnis der im Schleuderprozess auftretenden Unwucht erlaubt es einerseits, die zur Herstellung der Wäschepflegemaschine 1 zu verwendenden Bauteile auf eine maximale und durch das hier beschriebene Verfahren zu überwachende Unwucht einzustellen und damit Kosten für diese Bauteile zu senken. Andererseits ist es auch möglich, einem Nutzer der Wäschebehandlungsmaschine 1 über ein Bedienfeld an der Wäschebehandlungsmaschine 1 oder eine auf einem mobilen Terminal implementierte App eine individuelle Vorgabe von Schwellwerten für die während eines Schleuderprozesses auftretende Unwucht zu erlauben, damit dieser eine ungünstige Aufstellung der Wäschebehandlungsmaschine 1 berücksichtigen, auf die maximale Geräuschentwicklung der Wäschebehandlungsmaschine 1 oder deren voraussichtlichen Energieverbrauch Einfluss nehmen kann. Unabhängig davon trägt die Vermeidung unnötiger Anläufe zum Schleudern mit frühzeitigem Abstoppen und Neubeginn zwecks Umverteilung der Wäschestücke 6 zur Benutzerfreundlichkeit der Wäschebehandlungsmaschine 1 durch schnellere Erledigung von Prozessen zur Wäschebehandlung und Einsparung von Energie für unnötige Anläufe bei.

Erfindungsgemäß wird somit eine neue Methode zum Bestimmen einer Unwucht an einem schwingend aufgehängten und eine rotierende Komponente 4 aufweisenden Gegenstand 3 angegeben, welche mit geringem Aufwand an Sensorik und Maßnahmen zur Auswertung der entsprechenden Signale eine Bestimmung der Unwucht erlaubt.

### Bezugszeichenliste

- 1: Wäschebehandlungsmaschine
- 2: Gehäuse
- 3: Schwingend aufgehängter Gegenstand, Laugenbehälter
- 4: Trommel
- 5: Drehachse
- 6: Füllung, Wäschestücke
- 7: Manschette
- 8: Tür
- 9: Antriebswelle
- 10: Wellenlager
- 11: Erste Riemenscheibe
- 12: Antriebsriemen
- 13: Zweite Riemenscheibe
- 14: Motor
- 15: Stromsensor
- 16: Tachosensor
- 17: Federbein
- 18: Dämpferbein
- 19: 3D-Sensor
- 20: Steuereinrichtung
- 21: Korrelationseinheit
- 22: Kalibriermasse

## Patentansprüche

1. Verfahren zum Bestimmen einer Unwucht an einem schwingend aufgehängten und eine rotierende Komponente (4) aufweisenden Gegenstand (3), wobei die rotierende Komponente (4) mittels eines elektrischen Motors (14) zum Rotieren mit einer bestimmten Drehzahl angetrieben wird, indem der elektrische Motor (14) von einem bestimmten Strom durchflossen wird, wobei Sensoren (15, 16, 19) Betriebsdaten der rotierenden Komponente (4) kontinuierlich aufnehmen und einer mit den Sensoren (15, 16, 19) verbundenen Steuereinrichtung (20) zum Steuern der rotierenden Komponente (4) entsprechend den Betriebsdaten zuführen und wobei die Steuereinrichtung (20) die Unwucht aus den Betriebsdaten bestimmt, **dadurch gekennzeichnet, dass**
- die Sensoren (15, 16, 19) einen dem Gegenstand (3) zugeordneten Schwingungssensor (19) zum Messen von Schwingungen des Gegenstandes (3) in mehreren zueinander orthogonalen Dimensionen, einen Stromsensor (15) zum Messen des den Motor (14) durchfließenden Stroms und einen Drehzahlsensor (16) zum Messen der Drehzahl des Motors (14) umfassen;
- die Betriebsdaten einer der Steuereinheit (20) zugehörigen Korrelationseinheit (21), in welcher anhand von Trainingsdaten, welche als Betriebsdaten für den Gegenstand (3) bei jeweils vorgegebener Unwucht gemessen wurden, gelernte Korrelationen zwischen Unwuchten und Betriebsdaten gespeichert sind, zugeführt werden, und die Unwucht durch die Korrelationseinheit (21) aus den Betriebsdaten bestimmt wird.

2. Verfahren nach Anspruch 1, bei dem in der Korrelationseinheit (21) eine aus den Trainingsdaten bestimmte Regression implementiert ist, durch welche die Unwucht aus den Betriebsdaten bestimmt wird.

3. Verfahren nach Anspruch 2, bei dem die Korrelationseinheit (21) ein mit den Trainingsdaten trainiertes neuronales Netz ist.

4. Verfahren nach Anspruch 2, bei dem die Regression eine PLS-Regression ist.

5. Verfahren nach einem der vorigen Ansprüche, bei dem die Unwucht für eine Drehzahl bestimmt wird, welche größer als die bei der Bestimmung der Unwucht gemessene Drehzahl ist.

6. Verfahren nach Anspruch 5, bei dem die Unwucht durch eine Verteilung einer Füllung (6) in der rotierenden Komponente (4) beeinflusst ist, wobei die Verteilung der Füllung (6) veränderbar ist, indem die rotierende Komponente (4) mit einer Drehzahl rotiert, welche geringer als eine Fixierungsdrehzahl ist, bei welchem Verfahren die bei einer vorgegebenen Drehzahl bestimmte Unwucht mit einem ersten Schwellwert verglichen wird und, falls die bestimmte Unwucht größer als der erste Schwellwert ist, die Drehzahl der rotierenden Komponente (4) für ein vorgegebenes Zeitintervall auf einen Wert unterhalb der Fixierungsdrehzahl reduziert und anschließend wieder auf die vorgegebene Drehzahl erhöht wird, worauf eine erneute Bestimmung der Unwucht erfolgt.

7. Verfahren nach einem der Ansprüche 5 und 6, bei dem die rotierende Komponente (4) in einem Wellenlager (10) in dem Gegenstand (3) gelagert ist, und bei dem aus der bestimmten Unwucht eine Last bestimmt wird, welcher das Wellenlager (10) durch die Unwucht ausgesetzt ist.

8. Verfahren nach einem der Ansprüche 5 bis 7, bei dem die rotierende Komponente (4) bei einer vorgegebenen Nenndrehzahl rotiert und bei dem die Bestimmung der Unwucht zyklisch erfolgt, wobei jede bestimmte Unwucht mit einem zweiten Schwellwert verglichen wird und, falls die Unwucht größer als der zweite Schwellwert ist, die Drehzahl der rotierenden Komponente (4) auf eine Unternenndrehzahl kleiner als die vorgegebene Nenndrehzahl reduziert wird.

9. Verfahren nach Anspruch 8, bei dem die rotierende Komponente (4) bei der Unternenndrehzahl rotiert, wobei jede bestimmte Unwucht mit dem zweiten Schwellwert verglichen wird und, falls die Unwucht kleiner als der zweite Schwellwert ist, die Drehzahl der rotierenden Komponente (4) auf eine Drehzahl größer als die Unternenndrehzahl und kleiner oder gleich der vorgegebenen Nenndrehzahl erhöht wird.

10. Verfahren nach einem der vorigen Ansprüche, bei dem der Schwingungssensor (19) die Schwingungen in drei zueinander orthogonalen Dimensionen misst.

11. Vorrichtung (1) zur Durchführung des Verfahrens gemäß einem der vorigen Ansprüche, umfassend eine in einem schwingend aufgehängten Gegenstand (3) rotierende Komponente (4), einen elektrischen Motor (14) zum Antreiben der rotierenden Komponente zum Rotieren mit einer bestimmten Drehzahl, indem der elektrische Motor (14) von einem bestimmten Strom durchflossen wird, sowie Sensoren (15, 16, 19) zum kontinuierlichen Aufnehmen von Betriebsdaten der rotierenden Komponente (4) und eine mit den Sensoren (15, 16, 26) verbundene Steuereinrichtung (20) zum Steuern der rotierenden Komponente (4) entsprechend den Betriebsdaten und zum Bestimmen der die Unwucht aus den Betriebsdaten.

12. Vorrichtung (1) nach Anspruch 11, bei der der Gegenstand (3) mittels Federbeinen (17) und Dämpferbeinen (18) in einem Gehäuse (2) aufgehängt ist.

13. Vorrichtung (1) nach Anspruch 12, welche als Wäschebehandlungsmaschine (1) ausgebildet ist, wobei der Gegenstand (3) ein Laugenbehälter (3) ist, und wobei die rotierende Komponente (4) eine in dem Laugenbehälter angeordnete Trommel (4) zum Aufnehmen einer aus Wäschestücken gebildeten Füllung (6) ist.

14. Vorrichtung (1) nach Anspruch 13, welche ausgebildet ist, um das Verfahren zum Bestimmen der Unwucht in einem Schleuderprozess durchzuführen, bei welchem Schleuderprozess den Wäschestücken eine von diesen aufgesogene Behandlungsflüssigkeit, insbesondere Waschlauge, Spüllauge oder Wasser, durch Zentrifugieren entzogen wird.
